# EUROPÄISCHE PATENTSCHRIFT

(11) **EP 0 314 911 B1**
(45) Veröffentlichungstag und Bekanntmachung des Hinweises auf die Patenterteilung: **28.04.1993**
(21) Anmeldenummer: 88115632.7
(22) Anmeldetag: 23.09.1988
(51) Int. Cl.: F16D 55/224

(54) **Teilbelag-Scheibenbremse**
Spot-type disc brake
Frein à disque à garnitures partielles

(30) Priorität: 31.10.1987 DE 3737080
(43) Veröffentlichungstag der Anmeldung: 10.05.1989
(73) Patentinhaber: ALFRED TEVES GmbH, 60441 Frankfurt (DE)
(72) Erfinder: Birkenbach, Alfred, D-6234 Hattersheim 2 (DE); Halasy-Wimmer, Georg, D-6236 Eschborn (DE); Klimt, Ulrich, D-6109 Mühltal 3 (DE)
(74) Vertreter: Portwich, Peter

(56) Entgegenhaltungen:
- GB-A- 2 176 258
- GB-A- 2 182 989
- US-A- 4 476 962
- US-A- 4 540 068

## Beschreibung

Aus der US-A-4,476,962 ist es bekannt, bei Schwimmsattelbremsen im Gehäuse eine Öffnung vorzusehen, durch welche die Arme des Trägers ragen, an welchem die Bremsbeläge abgestützt sind. Der Vorteil einer derartigen sich über die Mitte der Gehäusebrücke erstreckenden Öffnung besteht darin, daß nach Entfernung von Führungsbolzen die Beläge in radialer Richtung entnommen werden können.

Bei einer derartigen Konstruktion ist es allerdings notwendig, daß die Gehäusebrücke zur Aufnahme der Bremskräfte in radialer Richtung relativ stark sein muß. Vielfach steht aber für eine hinreichende Stärke der Sattelbrücke bei einem Kraftfahrzeug aber kein ausreichender Platz zur Verfügung. Aus diesem Grund ist man dazu übergegangen, gegebenenfalls auf die radiale Entnahme der Beläge bei aufliegendem Sattel zu verzichten und zur Verstärkung der Brücke in ihrem mittleren Teil einen axialen Steg vorzusehen. Eine derartige Konstruktion ist beispielsweise aus der US-A-4,540,068 bekannt. Bei dieser Konstruktion werden die Beläge stets auf Druck beansprucht und neigen so zu einem erhöhten Schrägverschleiß als auch zu Geräuschentwicklung beim Bremsen.

Die Erfindung geht daher aus von einer Bremse der sich aus dem Oberbegriff des Hauptanspruchs ergebenden Gattung und hat sich zur Aufgabe gestellt, bei einer derartigen Bremse Maßnahmen vorzusehen, die eine Minimierung der Brückendicke gestatten und gleichzeitig den Schrägverschleiß und die Geräuschbildung der Bremsbeläge beim Bremsvorgang herabsetzen.

Die Aufgabe wird durch die sich aus dem kennzeichnenden Teil des Hauptanspruchs ergebende Merkmalskombination gelöst. Die Erfindung besteht im Prinzip also darin, zum einen eine Möglichkeit vorzusehen, daß zumindest einer der Bremsbeläge derart an der Sattelöffnung ziehend angreifen kann, daß die Kraft über den Sattel zum Träger übertragen wird, und zum anderen darin, die beiden mit Öffnungen versehenen spannungsarmen Bereiche der Gehäusebrücke in einer Tangentialebene durch den Gehäusebrückenschwerpunkt anzuordnen.

Sollen die Beläge auf dem Sattel relativ einfach entfernt werden können, so empfiehlt sich in Weiterbildung der Erfindung die Verwendung der Merkmale nach Anspruch 2. Danach ist es nicht notwendig, den gesamten Sattel zur Demontage der Beläge abzuheben, sondern es muß dieser nur ohne großen Kraftaufwand aufgeschwenkt werden.

Um die Entnahmemöglichkeit der Bremsbeläge zu verbessern, empfiehlt sich in Weiterbildung der Erfindung die Merkmalskombination nach Anspruch 3. Damit ist der Vorteil erreicht, daß zum einen bei großen Kräften die Bremsklötze sich am Träger abstützen, zum anderen aber beim Aufschwenken des Sattels die Beläge aus dem Träger gleichzeitig herausgehoben werden.

Die Erfindung empfiehlt sich besonders im Zusammenwirken mit der Merkmalskombination nach Anspruch 4, wobei der Träger im wesentlichen durch den Achsschenkel gebildet ist, mit dem auch der Schwenkbolzen vereinigt wurde bzw. einen Teil des Achsschenkels bildet.

Um ein ungewolltes Aufschwenken zu verhindern, empfiehlt sich in Weiterbildung der Erfindung die Verwendung der Merkmale nach Anspruch 5. Um die Verriegelung selbst zu sichern, empfiehlt sich die Anwendung der Merkmalskombination nach Anspruch 6. Soll zusätzlich der Bremsklotz an einer Geräuschbildung gehindert werden, so stellen die Maßnahmen gemäß den Ansprüchen 7 bis 10 vorteilhafte Weiterbildungen der Erfindung dar.

Nachfolgend sind Ausführungsbeispiel der Erfindung anhand der Zeichnung näher erläutert.

Es zeigen
- Fig. 1: eine Prinzipdarstellung von in einem Gehäuse angeordneten Bremsträgerarmen,
- Fig. 2: eine Teilbelag-Scheibenbremse in teilweise geschnittener Seitenansicht,
- Fig. 3: dieselbe Teilbelag-Scheibenbremse in teilweise geschnittener Vorderansicht mit einem Bremsträgerarm zwischen zwei Gehäusearmen angeordnet, und
- Fig. 4: dieselbe Teilbelag-Scheibenbremse in Draufsicht.

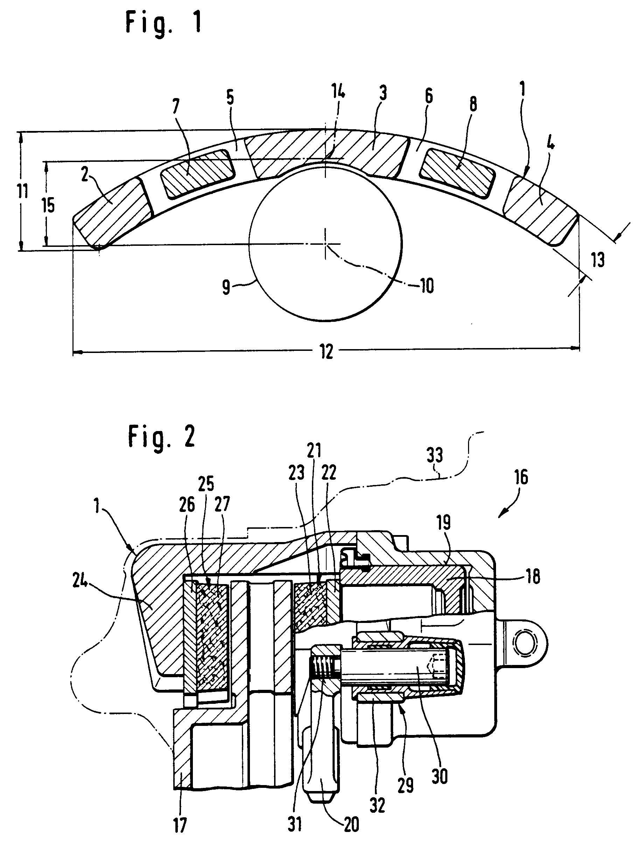

Fig. 1 zeigt eine Gehäusebrücke 2,3,4 eines Gehäuses 1 mit drei Brückenarmen 2,3,4. Zwischen den Brückenarmen 2,3,4 sind zwei Durchbrüche 5,6 im Bereich von neutralen Zonen des Gehäuses 1, auch spannungsarme Zonen genannt, angeordnet. In den Durchbrüchen 5,6 sind zwei Bremsträgerarme 7,8 angeordnet. Eine Kolbenzylindereinheit drückt einen Kolben mit einem Wirkkreis 9 und einem Mittelpunkt 10. Das Gehäuse 1 weist eine Gehäusebrückenhöhe 11, eine Gehäusebrückenbreite 12 und eine Gehäusebrückendicke 13 auf. Zwischen dem Kolbenmittelpunkt 10 und dem Gehäusebrückenschwerpunkt 14 wirkt bei Bremsbetätigung ein Moment aus einer Zuspannkraft multipliziert mit der Strecke 15. Bei gleicher Bremsenbreite wie bei Bremsen mit außenliegenden Trägerarmen 7,8 können Spannungen bei Bremsbetätigung stark reduziert werden bzw. die Brückendicke 13 kann minimiert werden. Somit läßt sich eine größere Bremsscheibe im Rad unterbringen, was einen größeren Wirkradius zur Folge hat. Durch die breitere Brücke wird das Biegemoment stark herabgesetzt und Spannungen reduziert. Je breiter die Brücke ist, desto näher rücken Kolbenmittelpunkt 10 und Brückenschwerpunkt 14 zusammen, was ein kleineres Biegemoment zur Folge hat. Wenn die Strecke 15 Null wird, treten nur noch Zugspannungen auf.

Fig. 2 zeigt eine Teilbelag-Scheibenbremse 16 mit einem eine Bremsscheibe 17 U-förmig übergreifenden Sattel, eine Kolbenzylindereinheit 18,19 mit einem Kolben 18 und einem Zylinder 19 und einem Bremsträger 20. Bei Bremsbetätigung drückt der Kolben 18 einen Bremsbelag 21, der eine Trägerplatte 22 und einen Reibbelag 23 aufweist direkt und mit Hilfe eines Schenkel 24 des Gehäuses 1 einen zweiten Bremsbelag 25, der eine weitere Trägerplatte 26 und einen weiteren Reibbelag 27 aufweist, mit dem Reibbelag 27 indirekt gegen die Bremsscheibe 17. Bei Bremsbetätigung wird das Gehäuse 1 mit der Kolbenzylindereinheit 18,19 mit Hilfe einer Bolzenführung 29 und eines Bolzens 30 relativ zum Bremsträger 20 bewegt. Der Bolzen 30 ist in einer Bohrung 31 des Bremsträgers 20 lösbar oder unlösbar befestigt. In einem Auge 32 des Gehäuses 1 ist die Bolzenführung 29 angeordnet. Das Gehäuse 1 mit der Bolzenführung 29 gleiten auf dem Bolzen 30 bei Bremsbetätigung. Die Teilbelag-Scheibenbremse ist in einer Felge mit einem Rand 33 angeordnet.

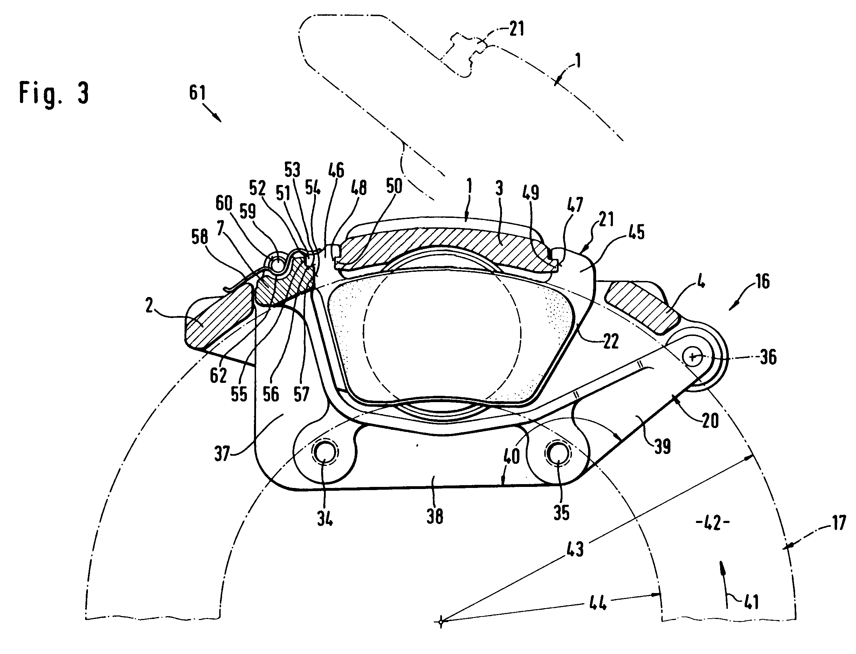

Fig. 3 zeigt die Teilbelag-Scheibenbremse 16 mit dem Bremsträgerarm 7 zwischen den Brückenarmen 2,3. Der Bremsträger 20 weist Bohrungen 34,35 auf, mit deren Hilfe der Bremsträger 20 starr mit einer Fahrzeugachse oder -aufhängung verbunden ist. Das Gehäuse 1 ist in vorteilhafter Weise um einen Punkt 36 drehbar am Bolzen 30 des Bremsträgers 20 gelagert. Vorzugsweise kann der Bolzen 30 direkt an der Fahrzeugachse befestigt werden, so daß der Bereich 39 des Bremsträgers 20 entfällt. Der Bremsträger 20 gliedert sich in drei Bereiche 37,38 und 39, wobei die Bereiche 37 und 38 ein L-förmiges Profil zueinander aufweisen, und sich der Bereich 39 mit einem stumpfen Winkel 40 am Bereich 38 anschließt. Der Bereich 39 ist schwach ausgebildet, weil er keine Bremskräfte aufzunehmen braucht. Die Drehung dient zum Aufklappen des Sattels und Wechseln der Beläge 21,25. Der Bremsbelag 21 wird mit seinem Reibbelag 23 gegen die Bremsscheibe 17 gedrückt, die bei Vorwärtsfahrt des PKW in Richtung 41 rotiert. Die Bremsscheibe 17 weist eine Reibfläche 42 mit Radien 43 und 44 auf. Das Gehäuse 1 weist die Brückenarme 2,3 und 4 auf, der Bremsträger 20 den Arm 7. Die Trägerplatte 22 des Bremsbelages 21 weist an den Brückenarm 3 umfassenden Enden 45,46 Nuten 47,48 auf, die sich an Vorsprüngen 49,50 des Brückenarmes 3 abstützen. Das Ende 46 weist einen weiteren Vorsprung 51 und Flächen 52,53 und 54 auf, die sich an Flächen 55 - 57 des Bremsträgerarmes 7 abstützen. Der Vorsprung 51 ist so angeordnet, daß die Bremsbeläge 21,25 mit dem Gehäuse 1 schwenkbar und nach dem Hochklappen des Gehäuses 1 von dem Gehäuse 1 axial lösbar sind. Die Trägerplatte 22 des Bremsbelages 21 ist bei Bremsbetätigung in Vorwärtsfahrt in zeitlicher Reihenfolge vorteilhaft zunächst einmal an dem Brückenarm 3 und danach am Bremsträgerarm 7 abgestützt. Bei Bremsbetätigung während einer Rückwärtsfahrt sind vorteilhaft das Ende 46 der Bremsbeläge 21,25 an dem Brückenarm 3 und über den Brückenarm 2 am Bremsträgerarm 7 abgestützt. Das Gehäuse 1 wird an seinem Brückenarm 2 von einer Feder 58 in Arbeitsstellung gehalten. Die Feder 58 ist über einen Bolzen 59 an dem Bremsträgerarm 7 angeordnet. Des weiteren stützt sich die Feder 58 an dem Ende 46 der Platte 22 und 26 des Bremsbelages 21 und 25 ab. Der Bolzen 59 ist in einer Öffnung 60 des Bremsträgerarmes angeordnet. Der Durchmesser der Öffnung 60 ist größer als der Durchmesser des Bolzens 59, so daß nach Herunterdrücken der Feder 58 in Richtung 61 der Bolzen 59 in die Öffnung 60 des Bremsträgerarmes 7 einführbar ist und nach Zurückfedern der Feder 58 der Bolzen 59 vorteilhaft in ein Federbett 62 zu ruhen kommt, das ein axiales Herausrutschen des Bolzens verhindert. Nicht dargestellt ist eine vorteilhafte Abstützung der Beläge 21,25 am Brückenarm 3 und die Abstützung des Brückenarmes 3 am Bremsträgerarm 7, der damit kürzer ausgelegt ist und axial nicht über die Bremsscheibe 17 ragt.

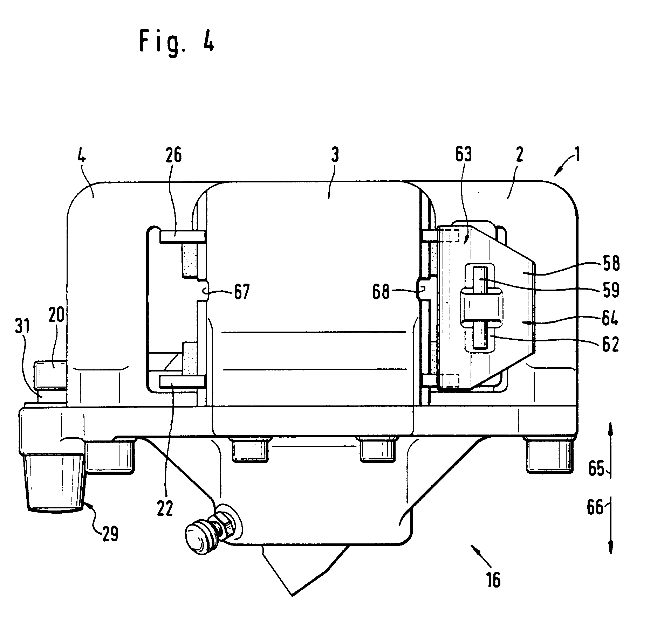

Fig. 4 zeigt die Teilbelag-Scheibenbremse 16 mit dem Gehäuse 1 in Draufsicht. Die Brückenarme 2,3 und 4 erstrecken sich über die Bremsscheibe 17 und sind auf der dem Kolben 18 gegenüberliegenden Seite miteinander verbunden. Das Gehäuse 1 ist nach Lösen der Feder 58 um den Bolzen 30 schwenkbar. Die Feder 58 ist mit dem lösbaren Bolzen 59 lösbar am Bremsträgerarm 7 angeordnet. Die Feder 58 weist im Bereich der Bremsbelagplatten 22,26 einen im wesentlichen rechteckförmigen Teil 63 und im Bereich des Sattelarmes 2 einen im wesentlichen trapezförmigen Teil 64 auf. Der rechteckförmige Teil 63 stützt sich an beiden Platten 22,26 der Bremsbeläge 21,25 ab. Das Federbett 62 verhindert ein axiales Herausrutschen des Bolzens 59 in eine der Richtungen 65,66. Ausnehmungen 67,68 sind an dem Brückenarm 3 zur Montage bzw. Demontage der Bremsbeläge 21,25 im aufgeklappten Zustand.

## Patentansprüche

1. Teilbelag-Scheibenbremse (16) mit einem eine Bremsscheibe U-förmig übergreifenden Gehäuse (1), einer Kolbenzylindereinheit, die einen ersten Bremsbelag (23) direkt und einen zweiten Bremsbelag (25) über das Gehäuse indirekt gegen die Bremsscheibe (17) drückt, und einem Bremsträger (20), der einen über die Bremsscheibe (17) ragenden Bremsträgerarm (7) aufweist, bei der in zumindest einem ersten Bereich der Gehäusebrücke (2,3,4) ein erster Durchbruch (5) vorgesehen ist, in den der Bremsträgerarm (7) ragt, an dem sich zumindest der erste (21) der beiden Bremsbeläge (21,25) abstützt, bei der in einem tangential versetzt dazu liegenden zweiten Bereich der Gehäusebrücke (2,3,4) ein zweiter Durchbruch (6) vorgesehen ist, in den zur Führung ein Ende (45) zumindest des ersten Bremsbelages (21) ragt und bei der in den beiden Bereichen, in denen Durchbrüche (5,6) vorgesehen sind, verhältnismäßig geringe Spannungen herrschen, dadurch **gekennzeichnet,** daß zumindest der erste Bremsbelag (21) an der Kante des zweiten Durchbruchs (6) geführt ist und daß sich die spannungsarmen Bereiche in einer Tangentialebene durch den Gehäusebrückenschwerpunkt (14) erstrecken.

2. Teilbelag-Scheibenbremse nach Anspruch 1, dadurch **gekennzeichnet,** daß das Gehäuse (1) um einen Bolzen (30) schwenkbar ist, welcher in bezug auf die Vorwärtsdrehrichtung (41) der Bremsscheibe (17) auf der einlaufenden Seite angeordnet ist.

3. Teilbelag-Scheibenbremse nach einem der vorangegangenen Ansprüche, dadurch **gekennzeichnet,** daß bei einer Schwenkbewegung (Fig. 3, gestrichelt) des Gehäuses (1) die Bremsbeläge (22,26) am Gehäuse (1) gehalten sind.

4. Teilbelag-Scheibenbremse nach Anspruch 2 oder 3, dadurch **gekennzeichnet,** daß der Bolzen (30) direkt mit dem Achsschenkel verbunden ist.

5. Teilbelag-Scheibenbremse nach einem der vorangegangenen Ansprüche, dadurch **gekennzeichnet,** daß in bezug auf die Vorwärtsdrehrichtung (41) der Bremsscheibe (17) auslaufseitig eine Verriegelung (58,59) vorgesehen ist, die in Verriegelungsstellung ein Aufschwenken des Gehäuses (1) verhindert.

6. Teilbelag-Scheibenbremse nach Anspruch 5, dadurch **gekennzeichnet,** daß die Verriegelung (58,59) eine sich auf dem Gehäuse (1) abstützende Feder (58) aufweist, welche in dem Träger (20) lösbar gehalten ist.

7. Teilbelag-Scheibenbremse nach Anspruch 6, dadurch **gekennzeichnet,** daß die Feder (58) sich ggf. zusätzlich auf mindestens einen der Bremsbeläge (22,26) abstützt und so ein Klappern des Bremsbelages verhindert.

8. Teilbelag-Scheibenbremse nach Anspruch 7, dadurch **gekennzeichnet,** daß die Feder (58) den Bremsbelag (22,26) in radialer Richtung gegen das Gehäuse (1) preßt.

9. Teilbelag-Scheibenbremse nach einem der Ansprüche 6 bis 8, dadurch **gekennzeichnet,** daß die Feder (58) durch einen Haltestift (59) gehalten ist, welcher lösbar in einer Öffnung (60) im Träger (20) verankert ist.

10. Teilbelag-Scheibenbremse nach einem der Ansprüche 1 bis 9, dadurch **gekennzeichnet,** daß die Abmessungen der Bremse derart gewählt sind, daß bei einer Bremsbetätigung der Bremsbelag (21) sich zunächst an der Gehäusebrücke (2,3,4) und danach durch die Brückenverschiebung sich direkt (Vorwärtsfahrt) oder indirekt über die Gehäusebrücke (2,3,4) am Bremsträgerarm (7) abstützt.

## Claims

1. A spot-type disc brake (16) with a housing (1) straddling a brake disc in an U-shaped manner, a piston-and-cylinder unit pressing a first brake lining (23) directly and a second brake lining (25) indirectly through the housing against the brake disc (17), and a brake carrier (20) provided with a brake carrier arm (7) which projects beyond the brake disc (17), wherein in at least one first zone of the housing bridge (2, 3, 4) a first aperture (5) is provided into which the brake carrier arm (7) is projecting on which at least the first (21) of the two brake linings (21, 25) takes support, wherein in a second zone of the housing bridge (2, 3, 4) which is disposed in a tangentially offset manner in relation thereto a second aperture (6) is provided into which an end (45) of at least the first brake lining (21) is projecting for the purpose of guidance, and wherein in the two zones in which apertures (5, 6) are arranged comparatively low tensions are prevailing,
**characterized** in that at least the first brake lining (21) is guided at the edge of the second aperture (6), and in that the low-tension zones extend in a tangential plane through the point of gravity of the housing bridge (14).

2. A spot-type disc brake as claimed in claim 1,
**characterized** in that the housing (1) is pivotable about a pin (30) which is arranged on the inlet side in respect of the forward direction of rotation (41) of the brake disc (17).

3. A spot-type disc brake as claimed in any one of the preceding claims,
**characterized** in that the brake linings (22, 26) are retained on the housing (1) in the event of a swivel motion (Figure 3, in phantom lines) of the housing (1).

4. A spot-type disc brake as claimed in claim 2 or 3,
**characterized** in that the pin (30) is directly coupled to the steering knuckle.

5. A spot-type disc brake as claimed in any one of the preceding claims,
**characterized** in that in respect of the forward direction of rotation (41) of the brake disc (17), a locking device (58, 59) is arranged on the outlet side which prevents the housing (1) to swivel upwards in the locked position.

6. A spot-type disc brake as claimed in claim 5,
**characterized** in that the locking device (58, 59) comprises a spring (58) which is supported on the housing (1) and which is held detachably in the carrier (20).

7. A spot-type disc brake as claimed in claim 6,
**characterized** in that the spring (58) additionally is supported on at least one of the brake linings (22, 26) and thus prevents rattling of the brake lining.

8. A spot-type disc brake as claimed in claim 7,
**characterized** in that the spring (58) presses the brake lining (22, 26) in radial direction against the housing (1).

9. A spot-type disc brake as claimed in any one of the claims 6 to 8,
**characterized** in that the spring (58) is held by a retaining pin (59) which is detachably anchored in an opening (60) in the carrier (20).

10. A spot-type disc brake as claimed in any one of the claims 1 to 9,
**characterized** in that the dimensions of the brake are chosen such that on brake actuation the brake lining (21) at first takes support on the housing bridge (2, 3, 4) and subsequently, due to the displacement of the bridge, takes support on the brake carrier arm (7) directly (forward driving) or indirectly via the housing bridge (2, 3, 4).

## Revendications

1. Frein à disque à garnitures partielles (16), comprenant un étrier (1), qui entoure en forme de U un disque de frein, une unité à piston et cylindre, qui applique deux garnitures de frein (23, 25) sur le disque de frein (17), la première (23) directement et la seconde (25) indirectement, par l'intermédiaire de l'étrier, et un support de frein (20) qui comporte un bras de support de frein (7) faisant saillie au-dessus du disque de frein (17), tandis que, dans au moins une première zone des ponts (2, 3, 4) de l'étrier, il est prévu un premier passage (5) dans lequel fait saillie le bras (7) du support de frein, sur lequel prend appui au moins la première (21) des deux garnitures de frein (21, 25), et que, dans une seconde zone des ponts (2, 3, 4) de l'étrier qui est décalée tangentiellement par rapport à la première, il est prévu un second passage (6) dans lequel fait saillie, en vue de son guidage, une extrémité (45) d'au moins la première garniture de frein (21), des contraintes relativement faibles régnant dans ces deux zones dans lesquelles des passages (5, 6) sont prévus, caractérisé en ce qu'au moins la première garniture de frein (21) est guidée sur le bord du second passage (6) et en ce que les zones soumises à de faibles contraintes s'étendent dans un plan tangentiel passant par le centre de gravité (14) de l'étrier.

2. Frein à disque à garnitures partielles suivant la revendication 1, caractérisé en ce que l'étrier (1) est agencé de façon à pouvoir basculer autour d'une broche (30) qui est disposée du côté de l'arrivée par rapport à la direction de rotation en marche avant (41) du disque de frein (17).

3. Frein à disque à garnitures partielles suivant l'une des revendications précédentes, caractérisé en ce que, lors d'un mouvement de basculement (figure 3, en trait interrompu) de l'étrier (1), les garnitures de frein (22, 26) sont maintenues sur cet étrier (1).

4. Frein à disque à garnitures partielles suivant l'une des revendications 2 et 3, caractérisé en ce que la broche (30) est reliée directement à la fusée d'essieu.

5. Frein à disque à garnitures partielles suivant l'une des revendications précédentes, caractérisé en ce que, du côté de la sortie par rapport à la direction de rotation en marche avant (41) du disque de frein (17), il est prévu un verrouillage (58, 59) qui, dans la position de verrouillage, empêche un soulèvement de l'étrier (1) par basculement.

6. Frein à disque à garnitures partielles suivant la revendication 5, caractérisé en ce que le verrouillage (58, 59) comprend un ressort (58) qui est en appui sur l'étrier (1) et qui est maintenu dans le support (20) d'une manière séparable.

7. Frein à disque à garnitures partielles suivant la revendication 6, caractérisé en ce que le ressort (58) est éventuellement en outre en appui sur au moins l'une des garnitures de frein (22, 26) et empêche ainsi un cliquetis de cette garniture de frein.

8. Frein à disque à garnitures partielles suivant la revendication 7, caractérisé en ce que le ressort (58) applique la garniture de frein (22, 26) en appui dans la direction radiale sur l'étrier (1).

9. Frein à disque à garnitures partielles suivant l'une des revendications 6 à 8, caractérisé en ce que le ressort (58) est maintenu par une broche de maintien (59) qui est ancrée d'une manière séparable dans une ouverture (60) du support (20).

10. Frein à disque à garnitures partielles suivant l'une des revendications 1 à 9, caractérisé en ce que les dimensions du frein sont choisies de façon telle que, lors d'un actionnement du frein, la garniture de frein (21) prend appui d'abord sur les ponts (2, 3, 4) de l'étrier, puis, par l'intermédiaire du déplacement du pont, sur le bras (7) du support de frein, directement (conduite en marche avant) ou indirectement par l'intermédiaire des ponts (2, 3, 4) de l'étrier.
